# FASCICULE DE BREVET EUROPEEN

(11) **EP 3 078 605 B1**
(45) Date de publication et mention de la délivrance du brevet: **02.10.2019**
(21) Numéro de dépôt: 16000783.7
(22) Date de dépôt: 06.04.2016
(51) Int. Cl.: B65D 81/28, A23L 3/3409, A23C 19/10, B65D 85/76

(54) **PROCEDE DE TRAITEMENT D'UN PRODUIT ALIMENTAIRE**
BEHANDLUNGSVERFAHREN EINES LEBENSMITTELARTIKELS
METHOD FOR TREATING A FOOD PRODUCT

(30) Priorité: 07.04.2015 FR 1500706
(43) Date de publication de la demande: 12.10.2016
(73) Titulaire: Fabrique des Gavottes, 39220 Bois d'Amont (FR)
(72) Inventeur: Lacroix, Philippe, 39220 Bois d'Amont (FR)
(74) Mandataire: Stona, Daniel

(56) Documents cités:
- FR-A1- 2 389 543
- FR-A1- 2 512 641
- FR-A1- 2 580 470
- FR-A1- 2 927 228
- US-A- 2 480 010
- US-A- 2 722 483
- US-A- 4 604 309
- US-A- 5 690 977
- US-A1- 2003 207 002

## Description

L'invention concerne un procédé de traitement d'un produit alimentaire ayant pour effet de conférer à ce produit un goût de produit fumé. L'invention a également pour objet un procédé de fumage d'un emballage ou d'une partie de celui-ci, un emballage fumé destiné au traitement précité, un ensemble produit alimentaire/emballage fumé, un procédé de préparation d'un produit alimentaire fini et emballé et un procédé de fabrication d'un emballage pour boîte, pot ou barquette, à usage notamment alimentaire.

### Arrière-plan de l'invention

On connaît, d'après la demande de brevet français publiée en 1978 sous le numéro FR 2 389 543, une enveloppe tubulaire pour des produits alimentaires, telle que des saucisses, cette enveloppe étant destinée à conférer une coloration et une saveur de fumage à des produits alimentaires. Pour cela, elle est constituée d'un matériau cellulosique dont une surface est revêtue d'un mélange d'un produit de fumage et de pectine dans des proportions particulières.

Par ailleurs, la demande de brevet européen publiée en 1994 sous le numéro EP 559 084 a trait à une enveloppe visant à améliorer l'enveloppe précitée en utilisant un autre revêtement qui est une solution de fumée liquide modifiée spéciale.

Les demandes internationales n° WO 2006000032 et WO 2007140116 font état de procédés chimiques ou naturels pour obtenir des emballages antibactériens sans odeur pour les aliments.

Le brevet étasunien n° 4 604 309 délivré en 1986 mentionne une enveloppe pour colorer des produits à base de viande comprenant de la cellulose régénérée et imprégnée d'un colorant.

La demande de brevet étasunien n° 2003/0207002 publiée en 2003 propose d'augmenter la couleur et l'odeur de produits alimentaires, en particulier des saucisses, contenues dans des enveloppes cellulosiques.

Les documents précités concernent des enveloppes souples constituées de cellulose ou d'un dérivé de cellulose. Les produits à base de viande sont généralement versés à l'intérieur. L'ensemble est ensuite normalement vendu dans le commerce dans un emballage classique. Aucun de ces emballages ne décrit l'utilisation d'un emballage comprenant du bois, ni ne concerne des produits alimentaires autres que des produits à base de viande.

### Exposé sommaire de l'invention

Le but majeur de l'invention est de proposer une technique différente, plus simple et moins coûteuse, pour donner à des aliments, en particulier des fromages, un goût de produit fumé.

L'invention est basée sur la découverte surprenante qu'il n'est pas nécessaire de prévoir sur une enveloppe un revêtement de fumage pour communiquer un goût de produit fumé au contenu de cet enveloppe.

L'inventeur a en effet constaté récemment avec surprise qu'en choisissant un contenant particulier, on pouvait grandement simplifier l'obtention d'un produit alimentaire à goût de produit fumé. Ce contenant particulier peut notamment être un contenant présentant une certaine porosité. Grâce à cette porosité, il semble donc possible de charger en quelque sorte le contenant avec une substance de fumage, de façon à ce que celle-ci puisse ensuite partiellement migrer vers le contenu, permettant ainsi à ce dernier d'acquérir un goût de produit fumé.

Grâce à cette étonnante particularité, le contenu n'a donc pas besoin de subir un traitement de fumage classique et sa qualité n'est par conséquent pas altérée ou dégradée, comme cela est souvent le cas avec les traitements de fumage classiques.

De plus, cette communication du goût de produit fumé par l'emballage au produit alimentaire s'effectue normalement en l'absence de tout chauffage, généralement à une température, inférieure à 50°C, de préférence à température ambiante, c'est-à-dire typiquement entre 15 et 30 degrés, ou à une température comprise entre 2 et 8°C (rayon de magasin) ou à température inférieure à -15°C, (congélateur).

Concrètement, l'invention a pour objet un procédé de traitement d'un produit alimentaire, dans lequel on réalise le fumage d'un emballage puis on place le produit alimentaire dans l'emballage, de manière à ce qu'il soit en contact au moins avec les côtés (ou parois latérales) et/ou le fond de l'emballage.

L'invention est décrite selon les revendications attachées.

Ce procédé de préparation d'un produit alimentaire fini et emballé évite donc le recours à une enveloppe pour recevoir le produit, puis à un emballage pour protéger l'ensemble. En réalisant à la fois le traitement du produit alimentaire et son emballage, il supprime donc une étape, il permet de gagner du temps et il est plus écologique, d'une parce qu'il n'a pas besoin de suremballage (enveloppe + emballage) et, d'autre part, parce qu'il fait appel à un emballage en bois, donc biodégradable.

De plus, le produit alimentaire est protégé par la rigidité du bois contre la déformation ou l'écrasement, il est donc manipulable, transportable et il est possible d'empiler plusieurs produits emballés les uns sur les autres.

Ce procédé permet donc d'obtenir un produit alimentaire fini, emballé pouvant directement être commercialisé, disposé sur des étals de marché ou des rayons de supermarché.

D'autres caractéristiques et avantages de l'invention vont maintenant être décrits en détail dans l'exposé qui suit.

### Exposé détaillé de l'invention

### Emballage et produit alimentaire

De nombreux matériaux peuvent être utilisés pour constituer l'emballage. Cependant, selon un mode de réalisation préféré de l'invention, on choisit un emballage présentant une certaine porosité, tel qu'un emballage en bois ou essentiellement en bois, notamment une boîte en bois, comme celles, cylindriques, qui sont habituellement utilisés pour conditionner certains fromages. Ces emballages ne se déforment quasiment pas lors du placement du fromage à l'intérieur.

De plus, le bois n'est pas comparable à la cellulose utilisée dans l'art antérieur, car sa teneur en cellulose n'est que de l'ordre de 50% car il comprend également de la lignine et de l'hémicellulose qui lui donnent sa rigidité et sa résistance à la décomposition.

Par « essentiellement en bois », il faut entendre ici que les boîtes en bois comportent généralement des agrafes métalliques ou d'autres éléments leur permettant de conserver leur forme.

Les dimensions et la forme de la boîte en bois dépendent généralement des dimensions de la forme du produit alimentaire.

Comme produit alimentaire, on choisit en particulier un fromage, tel qu'un fromage à pâte molle, un fromage dont le taux en eau est inférieur à 60%, un fromage à pâte pressée comme les raclettes, à croûte fleurie ou lavée, etc. Ce peut aussi être du pain, du jambon, des plats cuisinés, des terrines, des rillettes, des oeufs, des légumes, etc., éventuellement en combinaison.

Dans le cas précité des boîtes cylindriques, la boîte comporte un fond, une paroi latérale cylindrique et un couvercle.

Mais dans le cas d'autres fromages, elle peut être parallélépipédique, en particulier cubique, pyramidale, tronconique, prismatique, etc.

Les dimensions intérieures de la boîte sont de préférence sensiblement identiques à celles de ce qui sera son contenu, à savoir, le produit alimentaire.

Les boîtes cylindriques, qui sont le plus souvent utilisées pour emballer des fromages, sont généralement formées à partir d'une bande en bois appelée « targe », qu'on enroule en cylindre appelé « anneau » et que l'on fixe sur un fond en bois, pour obtenir une demi-boîte. Un couvercle en forme de disque sur la circonférence duquel est monté un rebord cylindrique est disposé sur la demi-boîte pour former une boîte. Les différentes parties de la boîte peuvent être, agrafées, collées, thermoformées, embouties, injectées, extrudées ou usinées dans la masse. Les targes et les fonds de boîte peuvent être obtenus par sciage, déroulage, tranchage, « targeage » (copeau sorti d'une varlope), par contre-collage, contre-placage, etc.

Le bois utilisé pour fabriquer l'emballage et son mode de fabrication ont une influence sur l'absorption, de la fumée. A titre d'exemple, une boîte avec un fond scié en épicéa capte plus de fumée qu'une boîte avec un fond déroulé en contreplaqué de peuplier.

En variante, les targes et les fonds peut être en carton, pulpe végétale ou matière plastique.

### Fumage de l'emballage

Le fumage de l'emballage se fait lorsque celui-ci est vide, avant que l'on y place le produit alimentaire.

Différents procédés de fumage peuvent être envisagés. On peut mettre en oeuvre les procédés de fumage connus notamment pour la préparation de saucisses fumées. Les procédés de fumage suivants conviennent en particulier à l'invention :
- fumage par combustion de bois dans un générateur de fumée pour produire un courant de fumées qui est ensuite refroidi à des températures dites froides (12 à 25°), moyennes (25-50°C) ou à chaud (50-90°C);
- fumage par injection dans le bois d'un arôme liquide à goût de produit fumé, à température ambiante (20°C) ou à chaud (50°C) ;
- fumage par trempage des emballages dans une fumée « liquide » (liquéfiée) à température ambiante (20°C) ou chaude (50°C) ;
- fumage par trempage des targes (flancs) ou rondelles dans une fumée liquide juste avant assemblage de la boîte ;
- fumage par aspersion ou vaporisation d'un brouillard de fumées à température ambiante (20°C) ou chaude (50°C) ;
- fumage par utilisation, lors de l'assemblage des parties constituantes de l'emballage, d'une colle d'assemblage préalablement aromatisée pour lui donner un goût de produit fumé ;
- fumage par enduction d'une solution de fumage solide (fumée liquide gélifiée) à température ambiante (20°C).

Dans le cas particulier du fumage d'un emballage tel qu'une boîte en bois, on réalise un fumage à une température allant de 10°C à 80°C et de préférence avec de la fumée obtenue par combustion d'herbes aromatiques et/ou de foin et/ou de sciure et/ou de copeaux de bois de hêtre, genévrier, aulne, frêne, érable, acacia, tilleul, pommier, merisier, prunier, noyer, tremble, orne, chêne, olivier, buis, châtaignier, robinier, peuplier, bouleau ou de résineux (sapin, épicéa, pin, thuya, séquoia, if, cyprès, etc.). Bien entendu, on peut également utiliser des mélanges de sciure ou de copeaux d'au moins deux de ces bois. De préférence, on utilise du bois de hêtre et/ou de sapin et/ou de genévrier.

Le choix du bois (« essence de bois ») permet d'adapter le fumage en fonction du produit contenu dans la boîte. Pour une telle adaptation, on peut notamment s'inspirer du tableau accessible sur Internet à l'adresse http://www.boisdefumage.com/

De plus, l'essence de bois utilisée pour la boîte influe sur la durée de fumage, la durée optimale d'utilisation de l'emballage ainsi que la date limite optimale de consommation du produit contenu.

Bien qu'il soit possible de fumer les parties constituantes de l'emballage individuellement, avant de les assembler pour former l'emballage, il est préférable de faire subir le fumage à l'emballage déjà monté, par exemple en disposant la totalité de l'emballage dans un courant de fumée. Ceci permet de disposer les emballages dans des conteneurs ajourés, puis de mettre ces derniers tous ensemble dans une cellule de fumage.

Néanmoins, dans le cas où on utilise des boîtes obtenues par le procédé faisant l'objet de la demande de brevet français publiée sous le numéro 2 937 012, il est préférable de ne fumer que le pourtour des boîtes, pour obtenir des emballages actifs empilables pratiques à utiliser dans le magasins de vente où la place est retreinte. Le fumage peut être effectué soit sur la bobine de bois avant ou après contre-collage, soit sur le flanc une fois découpé et il peut être continu.

Il est avantageux d'utiliser des composants d'emballage humides ou humidifiés, car ceci, d'une part, facilite l'assemblage de l'emballage, et, d'autre part, permet à la fumée de mieux migrer dans l'épaisseur de l'emballage. On peut ainsi réduire le temps de fumage. L'humidification est généralement réalisée par simple trempage des targes dans de l'eau chaude (50 à 90 degrés) ou en utilisant du bois fraîchement débité ayant un taux d'humidité interne élevé.

Les dimensions de l'étuve de fumage ou fumoir sont déterminées par la cadence de la machine de montage des emballages et par le temps de fumage nécessaire. Celui-ci est généralement de 30 minutes à 8 jours et il est diminué de moitié environ pour des emballages humidifiés.

A titre d'exemple, pour le fumage de boîtes en bois en épicéa de 11 cm de diamètre, avec une targe de 5 cm de hauteur et de 1 mm d'épaisseur et un fond de 3 mm d'épaisseur, une durée de 90 minutes est nécessaire. Avec une machine de fabrication de boîte, cette durée de fumage correspond à une production de 2500 boîtes rangées sur 2 chariots de 1,20 m de longueur, 0,85 m de largeur et 2 m de hauteur. La taille de la cellule de fumage doit donc avoir des dimensions pouvant contenir au minimum 2 chariots de fumage ainsi dimensionnés.

De préférence, on utilise des emballages dont les parties constituantes ont été collées (avec une colle alimentaire résistant à une température élevée, telle que les colles acryliques, cyanoacrylates ou polyuréthahe) car le fumage accélère la formation de rouille sur les agrafes métalliques galvanisées.

A l'issue du procédé de fumage, l'emballage est donc fumé dans toute son épaisseur et normalement sur toutes ses faces.

En variante, pour des utilisations demandant un goût fumé plus léger, on trempe seulement les targes (pourtour de la boîte) dans de la fumée liquide diluée à 50% et chauffée à 50°C.

L'emballage obtenu peut être conditionné en vrac dans un conteneur, par rangement dans un carton, par empilement ou par disposition en quinconce dans un conteneur ou chariot ajouré. Le contenant utilisé sert de préférence à livrer le client utilisateur et il peut être réutilisé après un éventuel nettoyage.

Pour le plats cuisinés avec de la pâte (quiche, pizza, etc.), le fumage se fait avantageusement avec un simple anneau (collerette) en bois fumé sans présence de fond car celui-ci empêcherait la cuisson de la pâte du fond.

### Utilisation de l'emballage fumé

Une fois l'emballage fumé, on y insère le produit alimentaire. De préférence, l'ajustement entre le produit alimentaire et l'emballage est serré afin que le produit alimentaire soit en contact avec le fond de l'emballage, ses parois latérales et éventuellement son couvercle. Ainsi, la transmission ou migration du goût de fumé peut s'effectuer de manière optimale de l'emballage vers le produit alimentaire.

En d'autres termes, selon l'invention, l'emballage n'est pas neutre, il est actif, puisqu'il exerce une fonction de transmission du goût de fumé. Il conduit en effet à modifier le conditionnement du produit emballé pour augmenter sa durée de vie, améliorer sa sécurité ou ses propriétés sensorielles, tout en maintenant ses qualités.

La mise en place de l'aliment dans l'emballage peut être réalisée alors que cet aliment n'est pas encore prêt à la consommation du fait que son processus de fabrication ou maturation n'est pas encore achevé. L'aliment peut donc mûrir ou, par exemple dans le cas d'un fromage, s'affiner, à l'intérieur même de l'emballage fumé.

Le couvercle, fumé ou non, peut ou non fermer l'emballage pendant l'achèvement du processus de fabrication, maturation ou affinage.

Les plats cuisinés qui demandent une cuisson à l'étouffée sont de préférence conditionnés dans une boîte avec un couvercle. Les mets à base de pâte tels que pizzas, quiches, sont de préférence conditionnés dans un simple anneau ou collerette en vue de faciliter la cuisson de la pâte du fond. La cuisson à la vapeur est facilitée si l'emballage en bois comporte des orifices dans le fond de boîte permettant à la vapeur de circuler à l'intérieur de l'emballage.

Afin que la transmission du goût de fumé ait le temps de se faire, on laisse généralement le produit alimentaire dans son emballage pendant une durée de contact qui est fonction de l'aliment, la durée maximale de contact étant liée à la date limite de consommation (DLC) du produit ou sa date limite d'utilisation optimum (DLUO).

Cette durée de contact entre l'emballage et le produit alimentaire est généralement d'au moins 5 jours.

Dans le cas particulier d'un fromage, elle est de préférence de 10 à 80 jours.

Le fait que le produit alimentaire soit inséré dans un emballage fumé peut avoir pour avantage d'augmenter sa durée de vie et de diminuer le risque de développement de moisissures, bactéries et autres organismes néfastes (listéria, coliformes, Escherichia coli,...).

De même, le fumage améliore aussi la qualité sanitaire de l'emballage lui-même car il est bien connu que la fonction originelle d'un fumage était de permettre la conservation des aliments. Le fumage peut donc, par extrapolation, favoriser ou prolonger dans le temps la qualité sanitaire de l'emballage. Ainsi, l'emballage fumé est un facteur favorable à l'augmentation de la date limite de consommation ou d'utilisation optimum.

De plus, le fumage, suivant le type d'emballage utilisé et en particulier dans le cas d'un emballage en bois, peut avoir un effet esthétique sur l'emballage et en améliorer l'aspect.

Il importe également de noter que l'emballage fumé permet aussi d'éviter la perte de poids du produit qui aurait été provoquée par un fumage direct du produit. Cette perte de poids du produit fumé est importante puisqu'elle varie généralement entre 5 et 20%. L'économie réalisée par le fumage de la boîte est donc souvent plus élevée que le prix de l'emballage fumé.

Par ailleurs, le fumage contribue à diminuer la quantité de sel incorporé dans l'aliment, ce qui est recommandé dans les nouvelles exigences sanitaires. On peut donc concevoir d'utiliser un emballage selon l'invention pour réduire la teneur en sel de l'aliment à emballer. Autrement dit, du fait qu'on utilisera un emballage selon l'invention, on peut, lors la préparation de cet aliment, lui incorporer moins de sel.

On peut aussi effectuer un fumage pour conférer à l'emballage des vertus thérapeutiques, par exemple, en utilisant pour le fumage du bois de genévrier.

Enfin, l'emballage fumé apporte en outre l'avantage de diffuser son parfum également vers l'extérieur. Placé dans un rayon, il peut donc attirer les consommateurs et influencer favorablement l'acte d'achat.

L'aliment resté en contact avec l'emballage selon l'invention acquiert un goût de produit fumé. Plutôt qu'aliment fumé, on peut lui préférer l'appellation de « produit, aromatisé », le cas échéant, « produit aromatisé aux essences de bois » ou « produit aromatisé aux arômes de bois ».

Il est également possible d'effectuer la cuisson du produit alimentaire à l'intérieur de l'emballage fumé, à une température inférieure à celle de la combustion du bois. Le goût de fumé n'est donc pas dû à la combustion du bois mais au fait que le bois lui-même a été fumé.

Selon un autre mode de réalisation de l'invention, l'intérieur de l'emballage comprend en outre un papier ou film perforé, de manière à ce que le produit alimentaire ne soit pas, comme exposé jusqu'à présent, en contact direct avec le bois. Cependant, grâce aux perforations et à ce contact indirect, le goût de fumé peut quand même être transmis au produit alimentaire.

On pourrait aussi envisager que le produit alimentaire ne soit en contact direct ou indirect qu'avec un seul côté ou une partie seulement de la paroi latérale de l'emballage.

On peut également prévoir que le produit alimentaire, en particulier le fromage, soit enveloppé d'un film micro-perforé. Les micro-perforations permettant alors la transmission du goût de fumé.

Selon un autre aspect, l'invention a trait à un procédé de fabrication d'un emballage pour boîte, pot ou barquette, à usage notamment alimentaire, comprenant une étape au cours de laquelle on confère une odeur de fumé ou aromatique ayant une propriété aseptisante ou particulière à l'extérieur de l'emballage. L'emballage ainsi obtenu a une odeur particulière pouvant faciliter l'acte d'achat du consommateur.

Ceci peut être réalisé notamment de la manière suivante : une feuille de bois déroulée ou tranchée est préalablement fumée ou imprégnée d'une solution de fumée liquide ou de produit aromatique et/ou aseptisant, puis découpée et mise en forme pour s'ajuster à la extérieure d'un contenant. La feuille découpée est ensuite contrecollée sur un support souple en matière plastique, par incorporation dans le moule de fabrication d'un emballage, selon la technique décrite dans le brevet FR 2937012 qui peut être utilisée avec le procédé « In Mould Labelling » (IML) .

Les propriétés aseptisantes évitent le risque de contamination due au bois lors de l'empilage des emballages, la partie extérieure en bois d'un emballage étant en contact avec la face intérieure de l'emballage dans lequel il est empilé. Le traitement du bois évite la contamination des emballages entre eux lors de l'empilage.

### Exemples de réalisation

### 1) Exemple 1

On a fabriqué de façon connue 6 boîtes en bois identiques du type boîte de Mont d'Or®.

Ces boîtes étaient constituées d'un anneau agrafé sur lui-même et sur un fond. Les agrafes étaient en acier galvanisé.

On a mis en oeuvre deux procédés de fumage, un fumage à fumée sèche et un fumage à fumée liquide dans les conditions et avec les résultats figurant dans le tableau suivant, puis on a placé un fromage (Fromager des clarines®, qui est un fromage à pâte molle et croûte fleurie, commercialisé par la Fromagerie PERRIN, 25330 Cléron) dans chaque boîte, le fromage était en contact avec le fond et les parois latérales de la boite :

| Procédé mis en oeuvre | | | | Boîtes fumées obtenues | | |
|---|---|---|---|---|---|---|
| Humidification de la boîte | Provenance de la fumée | Durée du fumage (h) | Séchage de la boîte | Réf. | Poids (g) | Résultat : goût du fromage après avoir séjourné dans la boîte |
| Non | Sciure de hêtre | 1 | Non | A | 30,0 | Faible goût de fumé |
| Oui | Sciure de hêtre | 2 | Non | B | 30,0 | Faible goût de fumé |
| Oui | Sciure de hêtre | 1 | Non | C | 30,0 | Goût satisfaisant et belle présentation |
| Non | Sciure de hêtre | 2 | Non | D | 30,7 | Goût de fumé satisfaisant et belle présentation |
| Non | Fumée liquide (1) | 1 | Oui | E | 34,7 | Fort goût de fumé, présentation peu satisfaisante (2) |
| Non | Fumée liquide (1) | 2 | Oui | F | 35,7 | Fort goût de fumé, présentation peu satisfaisante (2) |

| | | | | | | |
|---|---|---|---|---|---|---|
| (1) : la fumée liquide utilisée était de la fumée liquide de hêtre référence L1114 fournie par la société LUTETIA®. (2) : des taches sombres se sont formées autour des agrafes | | | | | | |

On voit donc que les meilleurs résultats sont obtenus pour les boîtes C et D. On peut en déduire qu'il est préférable de mettre en oeuvre un fumage à fumée sèche de sciure ou copeaux de hêtre. L'humidification se fait en amont, par simple trempage des targes dans de l'eau chaude (50°C) sans coût supplémentaire et elle permet une meilleure pénétration de la fumée dans le bois, réduisant le temps de fumage.

Cependant, l'avantage d'utiliser de la fumée liquide est que l'on maîtrise le taux de benzopyrènes, ce qui n'est pas le cas avec un générateur de fumée, surtout par incinération.

### Exemple 2

On a préparé une boîte fumée en l'humidifiant par brumisation puis en la fumant dans un fumoir traditionnel avec des branches de sapin et d'épicéa en mélange avec quelques branches de genièvre, le tout recouvert de sciure d'épicéa où le feu couvait. La température du fumage variait entre 20 et 30°C et le fumage a duré 7 jours.

Le fumoir traditionnel était le celui du Relais du Fumé, à,Champagnole (Jura, France).

On a ensuite placé des légumes (courgettes, pommes de terre, tomates, poivrons) dans la boîte puis, immédiatement après, on a mis le tout dans un four traditionnel à-chaleur tournante à 180°C durant 60 minutes.

Les légumes avaient un goût de fumé agréable, comme si on les avait mélangés à de la viande fumée.

Il apparaît que la tomate est le légume qui prend le meilleur goût de fumé.

### Exemple 3

Un restant de légumes cuits dans une boîte fumée fermée par un couvercle fumé, donc à l'étouffée, puis réchauffés dans une poêle 24 heures après ont gardé leur bon goût de fumé.

### Exemple 4

On a également fait cuire une quiche lorraine avec sa garniture dans une collerette (ou anneau) constituée par une targe qui avait été fumée au fumoir traditionnel durant 3 heures ou trempé dans de la fumée liquide de hêtre diluée à 50%. Les goûts obtenus étaient satisfaisants.

## Revendications

1. Procédé pour conférer un goût de produit fumé à un produit alimentaire, dans lequel :
- on réalise le fumage d'un emballage essentiellement en bois en disposant la totalité de l'emballage dans un courant de fumée ayant une température comprise entre 10 et 80°C ; et
- on place le produit alimentaire dans l'emballage de manière à ce qu'il soit en contact au moins avec les parois latérales et/ou le fond de l'emballage.

2. Procédé selon la revendication 1, dans lequel le produit alimentaire est un fromage.

3. Procédé selon la revendication 1, dans lequel le produit alimentaire est choisi parmi les produits alimentaires suivants : du pain, du jambon, des plats cuisinés, des terrines, des rillettes, des oeufs et des légumes, éventuellement en combinaison.

4. Procédé selon l'une des revendications 1 à 3, dans lequel on laisse le produit alimentaire séjourner dans l'emballage fumé pendant une durée d'au moins 5 jours.

5. Procédé selon l'une des revendications 1 à 4, dans lequel on laisse le produit alimentaire séjourner en l'absence de tout chauffage.

6. Procédé selon la revendication 1 à 5, dans lequel le fumage est réalisé pendant une durée comprise entre 30 minutes et 8 jours.

7. Procédé selon l'une des revendications 1 à 6, dans lequel le fumage de l'emballage est réalisé dans une fumée provenant de la combustion d'herbes aromatiques et/ou de foin et/ou de sciure et/ou de copeaux d'un bois choisi parmi le hêtre, le genévrier, l'aulne, le frêne, l'érable, l'acacia, le tilleul, le pommier, le merisier, le prunier, le noyer, le tremble, l'orne, le chêne, l'olivier, le buis, le châtaignier, le robinier, le peuplier, le bouleau, les résineux et les mélanges d'au moins deux de ces bois.

8. Emballage pour conférer un goût de produit fumé à un produit alimentaire **caractérisé en ce qu'**il est essentiellement en bois et qu'il a subi un traitement de fumage dans son épaisseur en étant totalement disposé dans un courant de fumée ayant une température de 10 à 80°C.

9. Emballage selon la revendication 8, dans lequel la fumée provient de la combustion de bois de hêtre et/ou de sapin et/ou de genévrier.

10. Emballage fumé selon la revendication 8 ou 9, dont l'intérieur comprend en outre un papier ou film perforé.

11. Utilisation d'un emballage fumé selon l'une des revendications 8 à 10 pour augmenter la durée de vie d'un produit alimentaire et diminuer le risque de développement de moisissures, bactéries et autres organismes néfastes.

12. Utilisation d'un emballage fumé selon l'une des revendications 8 à 10, dans laquelle on réalise la cuisson du produit alimentaire à l'intérieur de l'emballage, à une température inférieure à celle de la combustion du bois.

13. Ensemble composé d'un produit alimentaire et d'un emballage fumé selon l'une des revendications 8 à 10, le produit alimentaire étant en contact direct ou indirect au moins avec les parois latérales et/ou le fond de l'emballage fumé et dans lequel :
- le produit alimentaire est un fromage ; et
- le fumage de l'emballage a été réalisé en disposant l'emballage dans un courant de fumée provenant de la combustion de bois de hêtre et/ou de sapin et/ou de genévrier.

## Patentansprüche

1. Verfahren zum Verleihen eines geräucherten Produktgeschmacks an ein Lebensmittelprodukt, wobei:
- man das Räuchern einer Verpackung im Wesentlichen aus Holz realisiert, indem die Gesamtheit der Verpackung in einem Rauchstrom mit einer Temperatur zwischen 10 und 80°C angeordnet wird; und
- man das Lebensmittelprodukt so in der Verpackung platziert, dass es zumindest mit den Seitenwänden und/oder dem Boden der Verpackung in Kontakt ist.

2. Verfahren nach Anspruch 1, wobei das Lebensmittelprodukt ein Käse ist.

3. Verfahren nach Anspruch 1, wobei das Lebensmittelprodukt ausgewählt ist aus den folgenden Lebensmittelprodukten: Brot, Schinken, Fertiggerichte, Terrinen, Rillettes, Eier und Gemüse, gegebenenfalls in Kombination.

4. Verfahren nach einem der Ansprüche 1 bis 3, wobei man das Lebensmittelprodukt für eine Dauer von mindestens 5 Tagen in der geräucherten Verpackung verbleiben lässt.

5. Verfahren nach einem der Ansprüche 1 bis 4, wobei man das Lebensmittelprodukt in Abwesenheit jeglicher Erwärmung verbleiben lässt.

6. Verfahren nach Anspruch 1 bis 5, wobei das Räuchern während einer Dauer zwischen 30 Minuten und 8 Tagen durchgeführt wird.

7. Verfahren nach einem der Ansprüche 1 bis 6, wobei das Räuchern der Verpackung in einem Rauch durchgeführt wird, der von der Verbrennung von aromatischen Kräutern und/oder Heu und/oder Sägemehl und/oder Hackschnitzeln aus einem Holz herrührt, ausgewählt aus Buche, Wacholderbaum, Erle, Esche, Ahorn, Akazie, Linde, Apfelbaum, Kirschbaum, Pflaumenbaum, Nussbaum, Espe, Blumenesche, Eiche, Olivenbaum, Buchsbaum, Kastanienbaum, Robinie, Pappel, Birke, Nadelhölzer und Mischungen aus mindestens zwei dieser Hölzer.

8. Verpackung zum Verleihen eines geräucherten Produktgeschmacks an ein Lebensmittelprodukt, **dadurch gekennzeichnet, dass** sie im Wesentlichen aus Holz ist und in ihrer Stärke einer Rauchbehandlung unterzogen wurde, indem sie vollständig in einem Rauchstrom angeordnet wird, der eine Temperatur von 10 bis 80°C hat.

9. Verpackung nach Anspruch 8, wobei der Rauch von der Verbrennung von Buchenholz und/oder Tannenholz und/oder Wacholderholz herrührt.

10. Geräucherte Verpackung nach Anspruch 8 oder 9, deren Innenseite ferner ein perforiertes Papier oder eine perforierte Folie umfasst.

11. Verwendung einer geräucherten Verpackung nach einem der Ansprüche 8 bis 10 zur Verlängerung der Lebensdauer oder Haltbarkeit eines Lebensmittelprodukts und zur Verringerung des Risikos der Entwicklung von Schimmelpilzen, Bakterien und anderen schädlichen Organismen.

12. Verwendung einer geräucherten Verpackung nach einem der Ansprüche 8 bis 10, bei der das Kochen des Lebensmittelprodukts innerhalb der Verpackung bei einer Temperatur durchgeführt wird, die niedriger ist als die der Verbrennung des Holzes.

13. Anordnung, zusammengesetzt aus einem Lebensmittelprodukt und einer geräucherten Verpackung nach einem der Ansprüche 8 bis 10, wobei das Lebensmittelprodukt zumindest mit den Seitenwänden und/oder dem Boden der geräucherten Verpackung in direktem oder indirektem Kontakt ist und wobei:
- das Lebensmittel ein Käse ist und
- das Räuchern der Verpackung durch Anordnen der Verpackung in einem Rauchstrom aus der Verbrennung von Buchenholz und/oder Tannenholz und/oder Wacholderholz durchgeführt wurde.

## Claims

1. A process for imparting a smoky product taste to a food product, wherein:
- the smoking of a packaging essentially made of wood is carried out by placing the entire packaging in a stream of smoke having a temperature between 10 and 80°C; and
- the food product is placed in the packaging in such a way that it is in contact at least with the side walls and/or bottom of the packaging.

2. The process according to claim 1, wherein the food product is a cheese.

3. The process according to claim 1, wherein the food product is selected from the following food products: bread, ham, prepared meals, terrines, rillettes, eggs and vegetables, optionally in combination.

4. The process according to one of claims 1 to 3, wherein the food product is allowed to remain in the smoked packaging for a period of at least 5 days.

5. The process according to one of claims 1 to 4, in which the food product is allowed to remain in the absence of any heating.

6. The process according to claim 1 to 5, wherein smoking is carried out for a period of between 30 minutes and 8 days.

7. The process according to one of claims 1 to 6, in which the smoking of the packaging is carried out in a smoke resulting from the combustion of aromatic herbs and/or hay and/or sawdust and/or chips from a wood chosen from beech, juniper, alder, ash, maple, acacia, linden, apple, wild cherry, plum, walnut, aspen, flowering ash, oak, olive, boxwood, chestnut, locust, poplar, birch, conifer and mixtures of at least two of these woods.

8. A packaging for imparting a smoky product taste to a food product **characterized in that** it is essentially made of wood and has undergone a smoking treatment in its thickness by being totally disposed in a smoke stream having a temperature of 10 to 80°C.

9. The packaging according to claim 8, in which the smoke comes from the combustion of beech and/or fir and/or juniper wood.

10. The smoked packaging according to claim 8 or 9, the interior of which further comprises a perforated paper or film.

11. Use of a smoked packaging according to any of claims 8 to 10 to increase the shelf life of a food product and reduce the risk of the development of moulds, bacteria and other harmful organisms.

12. Use of a smoked packaging according to one of claims 8 to 10, in which the food product is cooked inside the packaging at a temperature lower than that of the wood combustion.

13. A set consisting of a food product and a smoked package according to one of claims 8 to 10, the food product being in direct or indirect contact at least with the side walls and/or bottom of the smoked packaging and in which:
- the food product is a cheese; and
- the smoking of the packaging was carried out by placing the packaging in a stream of smoke from the combustion of beech and/or fir and/or juniper wood.
